# FASCICULE DE BREVET EUROPEEN

(11) **EP 0 934 876 B1**
(45) Date de publication et mention de la délivrance du brevet: **02.07.2003**
(21) Numéro de dépôt: 99400216.0
(22) Date de dépôt: 01.02.1999
(51) Int. Cl.: B64D 13/04

(54) **Système d'alimentation en air chaud pour aéronef**
Warmluftversorgungseinrichtung für Flugzeug
Hot air supply system for aircraft

(30) Priorité: 05.02.1998 FR 9801351
(43) Date de publication de la demande: 11.08.1999
(73) Titulaire: AIRBUS FRANCE, 31060 Toulouse (FR); LIEBHERR-AEROSPACE TOULOUSE S.A., 31200 Toulouse (FR)
(72) Inventeur: Monfraix, Jean Henri, 31490 Leguevin (FR); Poirier, Didier Pascal Robert, 31700 Blagnac (FR); Cahingt, Hélène Elise, 31500 Toulouse (FR); Pradeau, Pierre Michel François, Lavalette - 31590 Verfeil (FR)
(74) Mandataire: Bonnetat, Christian

(56) Documents cités:
- EP-A- 0 190 943
- EP-A- 0 337 830
- EP-A- 0 507 725
- EP-A- 0 511 935
- US-A- 4 285 466
- US-A- 4 617 958

## Description

La présente invention concerne un système d'alimentation en air chaud pour aéronef.

On sait que, notamment pour assurer le fonctionnement des installations de conditionnement d'air de la cabine des aéronefs, des installations de dégivrage des surfaces aérodynamiques de la voilure, etc ..., on prélève de l'air chaud engendré par un moteur ou par chaque moteur de l'aéronef, pour obtenir de l'air régulé à une pression et à une température souhaitées et alimenter ainsi lesdites installations.

On connaît déjà, par exemple par le document EP-A-0 511 935, des systèmes d'alimentation en air chaud pour un aéronef pourvu d'au moins un moteur à soufflante et compresseurs, comportant :
- une première conduite, qui prélève de l'air chaud sous pression sur lesdits compresseurs et sur laquelle sont montées une vanne de régulation de débit et une vanne de régulation de pression, lesdites vannes comportant respectivement un organe commandé susceptible de contrôler le passage de l'air chaud dans ladite première conduite ;
- une seconde conduite, qui prélève de l'air froid sous pression sur ladite soufflante et sur laquelle est montée une vanne de régulation de débit, ladite vanne comportant un organe commandé susceptible de contrôler le passage de l'air froid dans ladite seconde conduite ;
- un échangeur thermique de prérefroidissement auquel sont reliées lesdites première et seconde conduites ;
- un détecteur de température d'air, disposé à la sortie dudit échangeur thermique ;
- un détecteur de pression d'air, disposé sur ladite première conduite de prélèvement d'air chaud ; et
- un dispositif de contrôle recevant des signaux électriques représentatifs des mesures dudit détecteur de température et dudit détecteur de pression et commandant ladite vanne de régulation de débit d'air chaud.

Dans ces systèmes connus, la commande et le contrôle desdits dispositifs de régulation sont pneumatiques ou mécaniques. Il en résulte un certain nombre d'inconvénients :
- tout d'abord, ils ne peuvent fonctionner qu'à des températures ou à des pressions d'air prédéterminées, de sorte que leur fonctionnement est rigide et ne peut être en permanence adapté aux besoins ;
- lorsque lesdits systèmes sont de type pneumatique, ils nécessitent de comporter des tuyaux de liaison pneumatique pour transmettre les ordres et les informations de pression gazeuse. De tels tuyaux de liaison sont difficiles à installer et sujets à des fuites difficiles à détecter et à localiser. De plus, leur remplacement nécessite un contrôle long et coûteux. Ainsi, le dépannage et la maintenance de tels systèmes pneumatiques sont délicats, difficiles et onéreux ;
- lorsque lesdits systèmes sont de type mécanique, leurs composants mécaniques sont soumis à usure dans leur fonctionnement, de sorte que les jeux et les frottements dérivent dans le temps et qu'il est nécessaire de procéder à de nombreux et fréquents réglages. Là encore, la maintenance desdits systèmes est délicate, difficile et onéreuse.

La présente invention a pour objet de remédier à ces inconvénients.

A cette fin, selon l'invention, le système d'alimentation en air chaud pour aéronef, du type mentionné ci-dessus est remarquable :
- en ce que ladite vanne de régulation de débit d'air chaud, ladite vanne de régulation de pression d'air chaud et ladite vanne de régulation de débit d'air froid comportent chacune un bloc de commande apte à contrôler l'organe commandé correspondant ;
- en ce que chacun desdits blocs de commande comporte des moyens, contrôlés électriquement, aptes à prélever de l'air sous pression dans lesdites première et seconde conduites pour actionner pneumatiquement ledit organe commandé correspondant ; et
- en ce que ledit dispositif de contrôle commande, en plus de ladite vanne de régulation de débit d'air chaud, ladite vanne de régulation de pression d'air chaud et ladite vanne de régulation de débit d'air froid, assurant ainsi la gestion centralisée dudit système.

Ainsi, selon la présente invention, lesdits dispositifs de régulation à puissance pneumatique sont à commande électrique, de sorte que :
- les pressions et températures d'air délivrées peuvent être variables et adaptées aux besoins, le fonctionnement du système conforme à la présente invention étant donc très souple ;
- le dépannage et la maintenance des liaisons électriques sont facilités par rapport aux liaisons pneumatiques ; et
- les composants mécaniques sont peu nombreux et on s'affranchit donc des réglages fréquents nécessaires sur les systèmes mécaniques.

Avantageusement, pour faciliter encore plus le dépannage et la maintenance du système conforme à la présente invention, il est avantageux que chacun desdits blocs de commande forme une unité de construction avec l'organe commandé correspondant, ladite unité de construction pouvant donc être disposée au voisinage de l'une ou de l'autre des première et seconde conduites d'air.

Il est avantageux que ledit détecteur de pression d'air chaud soit monté entre la vanne de régulation de pression et l'échangeur thermique.

Dans un mode avantageux de réalisation, dans lequel ladite première conduite de prélèvement d'air chaud présente, du côté desdits compresseurs, deux voies séparées dont l'une est reliée aux étages à haute pression desdits compresseurs et comprend ladite vanne de régulation de débit d'air chaud, et dont l'autre est reliée aux étages à pression intermédiaire desdits compresseurs et comprend une vanne mécanique unidirectionnelle, ledit système conforme à la présente invention comporte un détecteur de pression d'air supplémentaire disposé sur ladite autre branche de ladite première conduite de prélèvement d'air chaud, entre ladite vanne mécanique unidirectionnelle et lesdits étages à pression intermédiaire desdits compresseurs, ledit détecteur de pression d'air supplémentaire adressant des signaux électriques représentatifs de ses mesures audit dispositif de contrôle.

Ainsi, il est possible d'utiliser principalement l'air chaud à pression intermédiaire pour alimenter les installations utilisatrices et de ne faire appel à l'air chaud à haute pression que lorsque l'air chaud à pression intermédiaire n'est pas suffisant pour satisfaire les besoins desdites installations en air chaud.

De préférence, l'organe commandé de ladite vanne de régulation de débit d'air chaud est un papillon pivotant, disposé dans la première conduite au voisinage de la sortie des étages à haute pression desdits compresseurs, et le bloc de commande de ladite vanne de régulation de débit d'air chaud comprend :
- un actionneur pneumatique, relié mécaniquement audit papillon pour son pivotement ;
- un conduit de dérivation mettant en communication ledit actionneur avec ladite première conduite, en amont dudit papillon ; et
- un actionneur électrique relié électriquement audit dispositif de contrôle et commandant le passage de l'air chaud dans ledit conduit de dérivation.

De même, l'organe commandé de ladite vanne de régulation de pression d'air chaud peut être un papillon pivotant disposé dans ladite première conduite d'air chaud, et le bloc de commande de ladite vanne de régulation de pression d'air chaud peut comprendre :
- un actionneur pneumatique, relié mécaniquement audit papillon pour son pivotement ;
- un conduit de dérivation mettant en communication ledit actionneur avec ladite première conduite, en amont dudit papillon ;
- un actionneur électrique relié électriquement audit dispositif de contrôle et commandant le passage de l'air chaud dans ledit conduit de dérivation ; et
- des moyens de modulation commandés électriquement par ledit dispositif de contrôle et modulant la quantité d'air chaud adressé audit actionneur à travers ledit conduit de dérivation.

Lesdites vannes de régulation de débit et de pression d'air chaud peuvent comporter un réducteur de pression monté sur ledit conduit de dérivation.

L'organe commandé de ladite vanne de régulation du débit d'air froid peut être également un papillon pivotant disposé dans ladite seconde conduite d'air froid, et le bloc de commande de ladite vanne de régulation de débit d'air froid peut comprendre :
- un actionneur pneumatique, relié mécaniquement audit papillon pour son pivotement ;
- un conduit de dérivation mettant en communication ledit actionneur avec ladite première conduite d'air chaud, en aval de ladite vanne de régulation de pression d'air chaud ; et
- des moyens de modulation commandés électriquement par ledit dispositif de contrôle et modulant la quantité d'air froid adressé audit actionneur à travers ledit conduit de dérivation.

Dans ladite vanne de régulation du débit d'air froid, un conduit peut relier ladite seconde conduite de prélèvement d'air froid, en amont du papillon pivotant, auxdits moyens de modulation pour en assurer le refroidissement.

Ainsi, les trois vannes de régulation sont commandées électriquement, fonctionnent pneumatiquement, et les quantités d'air circulant dans la vanne à haute pression et dans la vanne d'admission d'air froid peuvent être avantageusement modulées selon les besoins par lesdits moyens modulateurs, pour optimiser les performances du système d'alimentation en air chaud, conforme à la présente invention.

Les figures du dessin annexé feront bien comprendre comment l'invention peut être réalisée. Sur ces figures, des références identiques désignent des éléments semblables.

La figure 1 illustre schématiquement un système d'alimentation en air chaud, conforme à la présente invention.

Les figures 2, 3 et 4 montrent, schématiquement en coupe, des dispositifs de régulation du système de la figure 1.

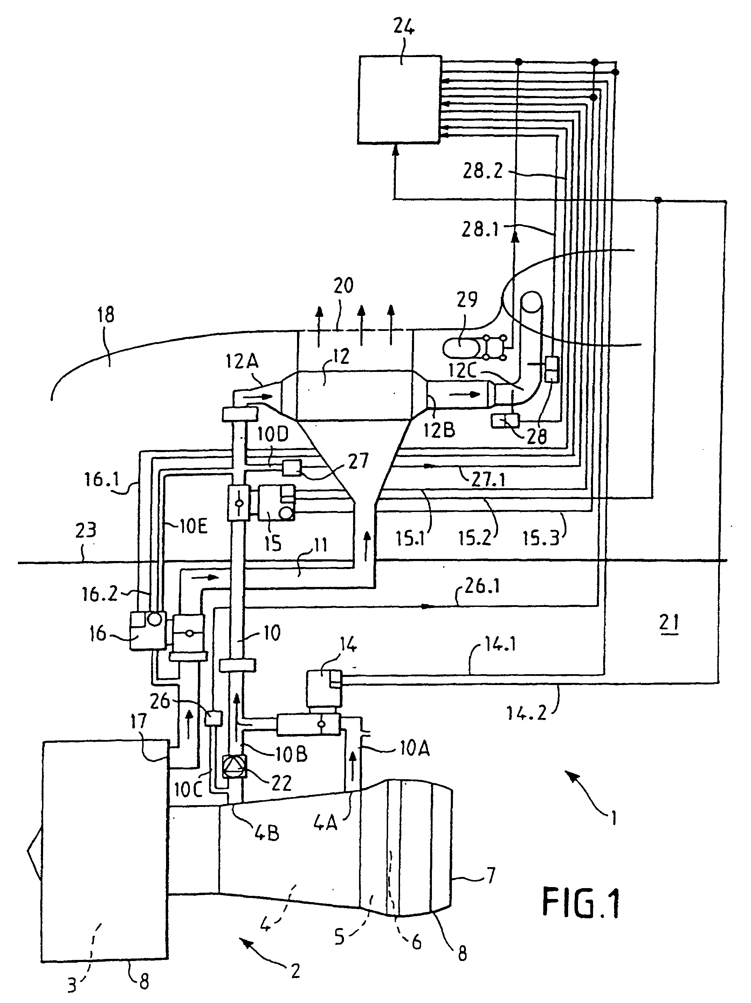

Le système 1, conforme à la présente invention et montré sur la figure 1, est associé à un réacteur 2 d'aéronef sur lequel il prélève de l'air chaud pour fournir de l'air régulé à une température et à une pression souhaitées, à des installations utilisant un tel air (non représentées), telles que par exemple l'installation de conditionnement d'air de la cabine dudit aéronef, l'installation de dégivrage des surfaces aérodynamiques de ce dernier, etc ...

Le réacteur 2 illustré est du type à double flux, et il comprend usuellement et schématiquement, d'amont en aval :
- une soufflante 3 ;
- des compresseurs basse et haute pression 4 ;
- une chambre de combustion 5 ;
- des turbines 6 ; et
- une tuyère de sortie 7.

Des carénages de protection 8 enveloppent les différents éléments ci-dessus, de façon connue en soi.

Le système 1 comprend une conduite de prélèvement d'air chaud 10, une conduite de prélèvement d'air froid 11, un échangeur thermique de prérefroidissement 12 et des dispositifs de régulation 14, 15 et 16 régulant les débits de l'air chaud et de l'air froid circulant dans les conduites 10 et 11 pour fournir, en sortie de l'échangeur 12, un débit d'air régulé en température et en pression.

Plus particulièrement, la conduite d'air chaud 10 relie les compresseurs 4 du réacteur 2 à l'entrée 12A de l'échangeur 12. Du côté du réacteur 2, la conduite de prélèvement 10 se divise en deux voies 10A et 10B distinctes, raccordées respectivement à un orifice 4A disposé à la sortie des étages à haute pression des compresseurs 4 et à un orifice 4B disposé à la sortie des étages à pression intermédiaire ou moyenne pression desdits compresseurs 4. La conduite de prélèvement d'air froid 11 met en communication la soufflante 3, par l'intermédiaire d'une prise d'air 17 prévue dans le carénage correspondant 8 en aval de la soufflante, avec l'échangeur thermique 12. Ce dernier est ainsi parcouru transversalement par l'air froid venant de la soufflante, pour refroidir l'air chaud circulant dans l'échangeur depuis son entrée 12A jusqu'à sa sortie 12B. L'échangeur 12 est agencé dans le mât 18 supportant le moteur 2, et il est prévu une grille 20 dans ledit mât pour l'évacuation de l'air froid ayant parcouru ledit échangeur 12.

Le dispositif de régulation 14, monté sur la voie 10A de la conduite d'air chaud 10 du système, se présente sous la forme d'une vanne à haute pression susceptible de commander le passage de l'air chaud provenant des étages haute pression des compresseurs 4 (orifice 4A) vers l'entrée 12A de l'échangeur 12, à travers la conduite 10. La vanne 14 est située dans la nacelle 21 du réacteur 2. Sur la voie 10B de la conduite 10 est agencée une vanne mécanique unidirectionnelle 22 susceptible de commander le passage de l'air chaud provenant des étages moyenne pression des compresseurs (orifice 4B) vers l'entrée 12A de l'échangeur, à travers la conduite 10. Cette vanne 22 est située également dans la nacelle du réacteur.

De plus, sur la conduite 10, du côté de l'entrée 12A de l'échangeur 12, est agencé le dispositif de régulation 15, se présentant sous la forme d'une vanne de régulation de pression, disposée dans le mât 18 et séparée, par une cloison pare-feu 23, de la nacelle 21 du réacteur où sont prévues les vannes 14 et 22.

Le dispositif de régulation 16 est agencé sur la conduite d'air froid 11 et se présente également sous la forme d'une vanne transmettant l'air froid issu de la soufflante 3 à l'échangeur thermique 12. La vanne 16 est située dans le mât 18 du réacteur 2, mais dans la partie chaude, entre la cloison pare-feu 23 et le réacteur 2.

Selon l'invention, la vanne à haute pression 14, la vanne de régulation de pression 15 et la vanne d'admission d'air froid 16 sont à commande électrique et elles sont reliées, par des liaisons électriques respectives 14.1, 14.2 - 15.1, 15.2, 15.3 - 16.1, 16.2, à un dispositif de gestion centralisée 24 délivrant, en fonction des besoins, les ordres électriques de fonctionnement auxdites vannes 14, 15 et 16.

Au dispositif de gestion centralisée 24 sont par ailleurs reliés, par des liaisons électriques 26.1, 27.1, 28.1, 28.2 correspondantes :
- un capteur de pression de transfert 26, qui est en communication, par une dérivation 10C, avec la voie 10B de la conduite 10, pour mesurer la pression en amont de la vanne mécanique unidirectionnelle de pression intermédiaire 22 et transmettre la mesure au dispositif de gestion 24 pour transférer automatiquement, si cela est nécessaire, le prélèvement d'air de l'orifice 4A vers l'orifice 4B ;
- un capteur de pression de prélèvement 27, qui est en communication, par une dérivation 10D, avec la conduite d'air chaud 10, et dont la mesure est transmise au dispositif de gestion 24 pour commander et contrôler la pression de l'air chaud en aval de la vanne de régulation 15, avant son entrée dans l'échangeur, et pour transférer automatiquement, si cela est nécessaire, le prélèvement de l'orifice 4B vers l'orifice 4A, quand la pression dans l'orifice à moyenne pression 4B n'est pas suffisante pour obtenir la demande en pression de prélèvement ;
- deux capteurs de température de prélèvement 28, situés en série dans le conduit de sortie 12C de l'échangeur thermique 12 transmettant les mesures au dispositif de gestion 24 qui contrôle la température de l'air fourni aux installations, ce qui élimine les risques de température trop élevée.

Un élément 29, apte à détecter une surchauffe ambiante ou de l'environnement, est en outre prévu sur le mât 18, au voisinage dudit échangeur 12 et est également relié au dispositif de gestion 24 auquel il adresse ses mesures.

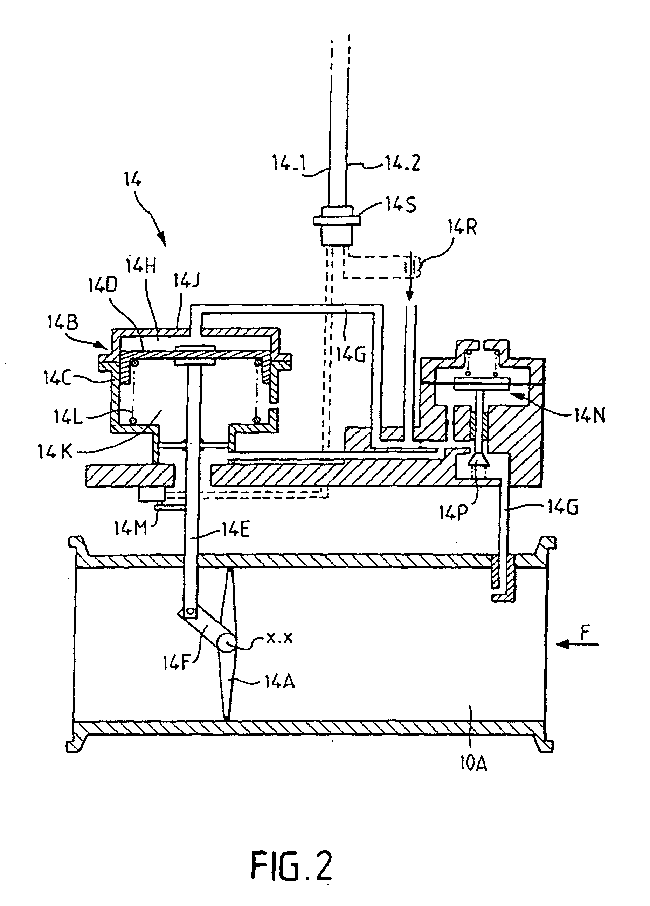

Structurellement, la vanne à haute pression 14 (représentée en coupe schématique sur la figure 2) est du type à papillon 14A pivotant autour d'un axe x-x (perpendiculaire au plan de la figure 2) et monté dans la voie 10A de la conduite 10 et est susceptible de fermer ou d'ouvrir le passage de l'air chaud issu des compresseurs à haute pression (flèche F), en direction de l'échangeur 12.

La vanne 14 comprend un bloc de commande ou actionneur 14B à commande pneumatique, relié mécaniquement au papillon 14A et constitué, à la manière d'un vérin à double effet, d'un cylindre 14C à l'intérieur duquel peut coulisser, de façon étanche, un piston 14D qui actionne le papillon 14A par l'intermédiaire d'organes de transmission mécanique du type bielle 14E et maneton 14F.

Par ailleurs, un conduit de dérivation 14G, ménagé dans la vanne 14, met en communication la voie 10A, en amont du papillon 14A par rapport au sens d'écoulement F de l'air chaud, avec une chambre 14H de l'actionneur, située entre le fond 14J du cylindre et le piston 14D. Dans la chambre 14K, opposée à la précédente, est disposé un ressort de rappel 14L qui entraîne la fermeture du papillon 14A. Un contacteur de fin de course 14M indique en outre la position fermée/non fermée de la vanne. De plus, un réducteur de pression 14N équipé d'un clapet 14P est agencé sur le conduit de dérivation 14G pour délivrer une pression constante dans la chambre 14H de l'actionneur 14B et réduire ainsi dans celui-ci, la charge de pression de la voie d'air chaud.

La commande électrique de l'ouverture et de la fermeture de la vanne 14 est assurée par un solénoïde 14R agissant (de façon illustrée seulement schématiquement) au niveau du conduit de dérivation 14G de la vanne, pour contrôler le passage d'air chaud dans ce dernier conduit.

Le solénoïde 14R et le contacteur de fin de course 14M sont reliés électriquement au dispositif de gestion 24, par l'intermédiaire d'un connecteur 14S, auquel sont reliées les liaisons électriques 14.1 et 14.2.

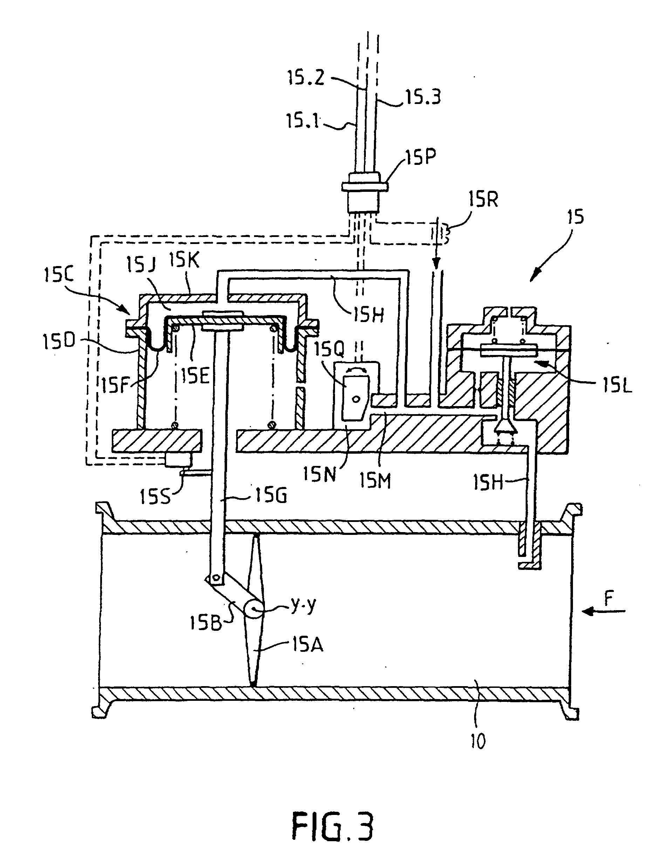

La vanne de régulation de pression 15, représentée schématiquement sur la figure 3, est également du type à papillon 15A pivotant autour d'un axe y-y (perpendiculaire au plan de la figure 3) et monté dans la conduite 10 pour fermer ou ouvrir la circulation d'air chaud en direction de l'échangeur 12. Elle a pour but de réguler la pression d'air chaud fourni, après passage dans l'échangeur 12, aux installations utilisatrices de façon à réduire la contrainte pour les composants disposés en aval, quand la pression de prélèvement sur moteur est élevée.

La vanne 15 présente une structure proche de celle de la vanne 14 et elle comprend un bloc de commande ou actionneur pneumatique 15C (ou vérin à simple effet), constitué d'un cylindre 15D et d'un piston 15E muni d'un diaphragme souple 15F et prolongé par une tige 15G. L'extrémité libre de celle-ci est articulée à un maneton 15B solidaire du papillon 15A. Un conduit de dérivation 15H est ménagé dans la vanne 15 et met en communication l'intérieur de la conduite 10, en amont du papillon 15A par rapport au sens d'écoulement F de l'air chaud, avec la chambre interne 15J de l'actionneur 15C, située entre le fond 15K du cylindre et le piston 15E à diaphragme. Il est également prévu un réducteur de pression 15L sur le conduit de dérivation 15H auquel est relié, entre le réducteur et l'actionneur, un passage de mise à l'air libre 15M, dont la section est commandée par une came 15Q actionnée par un moteur couple 15N. Celui-ci est intégré à la vanne 15 et peut commander, selon la position de ladite came 15Q, la baisse de pression dans le conduit de dérivation 15H (par l'intermédiaire du passage 15M) et, donc, la position du papillon 15A, en modulant la pression d'air transmise dans la chambre 15J de l'actionneur 15C. Pour cela, le moteur couple 15N est relié et commandé électriquement par le dispositif de gestion 24 en fonction des besoins. La vanne 15 comporte de plus un solénoïde 15R commandant (de façon analogue au solénoïde 14R) l'ouverture et la fermeture de la vanne 15 par contrôle du passage de l'air chaud dans le conduit de dérivation 15H, et un contacteur de fin de course 15S indiquant la position fermée/non fermée de la vanne 15. Le moteur couple 15N, le solénoïde 15R et le contacteur de fin de course 15S sont reliés électriquement au dispositif de gestion 24, par l'intermédiaire d'un connecteur 15P, auquel sont reliées les liaisons électriques 15.1, 15.2 et 15.3.

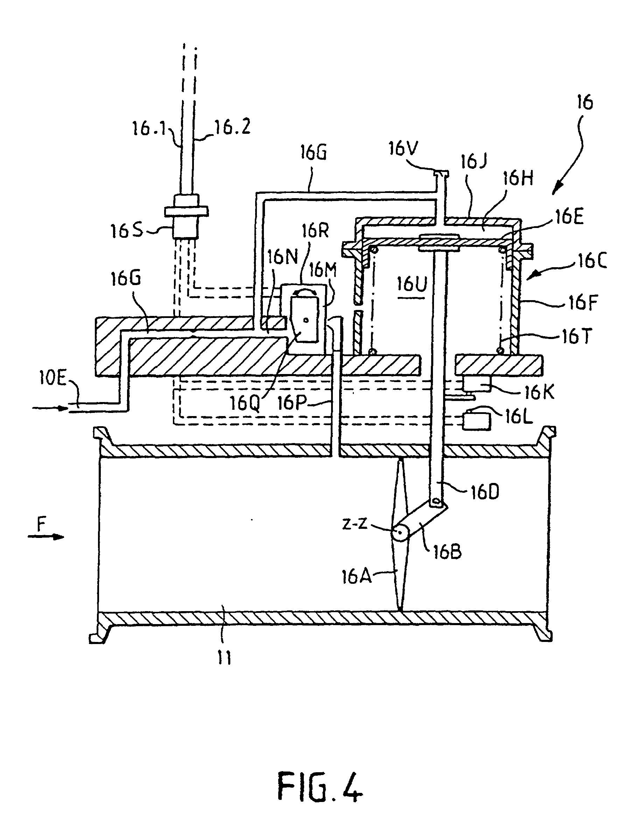

La vanne d'admission d'air froid 16 disposée sur la conduite 11 est représentée sur la figure 4 et elle est également, selon l'invention, commandée électriquement pour fonctionner pneumatiquement. Comme les vannes 14 et 15, la vanne 16 est du type à papillon 16A pivotant autour d'un axe z-z (perpendiculaire au plan de la figure 4) et elle est montée sur la conduite 11 pour obturer ou ouvrir le passage d'air froid issu de la soufflante 3. Elle comprend à cet effet un bloc de commande ou actionneur 16C à fonctionnement pneumatique (ou vérin à simple effet) qui commande le papillon 16A par l'intermédiaire de la tige 16D d'un piston 16E monté coulissant, de façon étanche, dans le cylindre 16F de l'actionneur, l'extrémité libre de la tige 16D étant reliée au papillon par un maneton 16B.

La commande pneumatique de l'actionneur 16C est assurée, comme précédemment, par un conduit de dérivation 16G mettant en communication une voie 10E de la conduite d'air chaud 10 de la vanne de régulation 15, en aval de celle-ci, avec la chambre 16H de l'actionneur entre le piston 16E et le fond 16J du cylindre. Deux contacteurs fin de course fermé/non fermé 16K et ouvert/non ouvert 16L sont liés à l'actionneur, tandis qu'un moteur couple 16M, associé à une came 16Q, commande la section d'une prise d'air 16N, prévue dans le passage de dérivation 16G. Ce moteur couple 16M commande la position du papillon 16A entre ses états fermé et ouvert, en modulant la pression adressée dans la chambre 16H de l'actionneur 16C.

Du fait qu'il est situé dans une zone chaude, le moteur couple 16M est ventilé par un écoulement d'air froid circulant dans une tubulure 16P reliant la conduite d'air froid 11, en amont du papillon, au moteur couple. En outre, un capot de protection 16R entoure celui-ci.

Le moteur couple 16M et les contacteurs 16K, 16L sont reliés au dispositif de gestion 24, par l'intermédiaire d'un connecteur 16S, auquel sont reliées les liaisons électriques 16.1 et 16.2.

Par ailleurs, un ressort de rappel 16T est agencé dans la chambre 16U de l'actionneur, opposée à la chambre 16H, pour rappeler spontanément le piston en position rentrée dans le cylindre et ainsi, fermer le conduit par le papillon.

Le fonctionnement du système et des différents organes le constituant est le suivant.

La vanne unidirectionnelle 22 est constamment ouverte et adresse, à l'échangeur 12, de l'air chaud traversant l'orifice 4B. Cet air chaud est limité en pression, en température et en débit.

Aussi, si le besoin en air régulé dépasse les possibilités de la seule vanne unidirectionnelle 22, ce qui est détecté par les capteurs 26, 27 et 28, la vanne à haute pression 14 est ouverte électriquement par le dispositif de gestion centralisée 24 et admet de l'air chaud sous pression à travers l'orifice de prélèvement 4A, tout en minimisant le prélèvement à partir des compresseurs haute pression 4 du réacteur 2. Quand la vanne 14 est opérationnelle, c'est-à-dire quand il n'y a pas assez de pression issue de la vanne 22, l'air chaud prélevé, qui sort de la voie 10A, circule ensuite dans le conduit 10 et est empêché de se diriger vers l'orifice 4B par la vanne unidirectionnelle 22.

Le fonctionnement de la vanne 14 est le suivant. Après excitation du solénoïde 14R par le dispositif de gestion 24, le conduit de dérivation 14G s'ouvre et de l'air chaud pénètre dans le passage de dérivation 14G et entre dans la chambre 14H de l'actionneur 14B. Cela entraîne la sortie du piston 14D et, par suite, le pivotement du papillon 14A de sa position fermée vers une position ouverte, par l'intermédiaire de la tige 14E et du maneton 14F, ce qui ouvre la voie 10A et permet le passage des gaz chauds en direction de la vanne de régulation 15 par la conduite 10.

On remarquera que la vanne 14 ne peut s'ouvrir que si, à la fois, le solénoïde est excité par le dispositif de gestion 24 et une pression existe en amont de la vanne 14. En effet, s'il n'y a pas de pression en amont de la vanne 14, le papillon 14A ne peut pivoter, même si le conduit de dérivation 14G est ouvert par le solénoïde 14R. Si, en revanche, de la pression existe en amont de la vanne 14, mais que le solénoïde n'est pas excité, notamment par suite d'une coupure d'alimentation électrique, le conduit 14G n'est pas ouvert et la vanne 14 reste fermée.

L'air chaud sous pression sortant de la vanne 14 circule dans la conduite 10 et arrive dans la vanne de régulation de pression 15, dont la mise en fonctionnement est commandée électriquement par le solénoïde 15R à la suite d'un ordre issu du dispositif de gestion 24. L'air chaud pénètre dans le passage de dérivation 15H, traverse le réducteur de pression 15L et se dirige dans l'actionneur 15C. La quantité d'air chaud à fournir dans la chambre 15J de l'actionneur en fonction des besoins est contrôlée par le moteur couple 15N, qui est commandé électriquement par le dispositif de gestion 24 et qui est en relation avec le conduit 15H, par le passage 15M. Il règle la fuite d'air chaud selon son degré de commande et permet ainsi de moduler la quantité d'air chaud envoyée dans l'actionneur 15C et, de là, le pivotement approprié du papillon 15A dans le conduit 10, en fonction du déplacement du piston 15E à diaphragme 15F et de sa tige 15G.

La vanne 15 réduit notamment la contrainte pour les composants situés en aval quand la pression de prélèvement est élevée. S'il y a de la pression en amont et si le solénoïde 15R est excité, la vanne de régulation 15 est contrôlée par le moteur couple. S'il n'y a pas de pression en amont ou si le solénoïde est désexcité, la vanne de régulation 15 est fermée. On voit que, pour des raisons de sécurité, s'il existe une pression en amont, mais aucune alimentation électrique du moteur couple, la vanne 15 est fermée. Ce mode de fonctionnement garantit que la vanne 15 reste en position fermée dans le cas d'une coupure d'alimentation électrique.

L'air chaud sortant de la vanne de régulation 15 se dirige ensuite vers l'entrée 12A de l'échangeur thermique 12 du système 1.

Simultanément, la vanne d'admission 16 fournit de l'air froid à l'échangeur, à travers la conduite 11. Pour cela, une partie de l'air chaud, en aval de la vanne 15, pénètre dans la canalisation 10E puis dans le conduit de dérivation 16G de la vanne 16 pour déboucher dans la chambre 16H de l'actionneur 16C. Là aussi, le moteur couple 16M, communiquant avec le conduit 16G par le conduit 16N et commandé électriquement par le dispositif de gestion centralisée 24, permet de moduler la quantité d'air agissant dans l'actionneur, ce qui provoque, par l'intermédiaire du piston 16E, de la tige 16D et du maneton 16B, le pivotement souhaité du papillon 16A dans le conduit 11.

S'il n'y a pas de pression amenée par le conduit 10E dans l'actionneur, la vanne 16 reste fermée. Cela permet la fermeture de la vanne en cas de feu du moteur 2 (la vanne 16 est entraînée vers sa position totalement fermée grâce à un fusible thermique 16V relié au passage 16G). Avec une pression d'actionnement dans le conduit de prélèvement 10E en aval de la vanne 15, mais sans alimentation du moteur couple 16H, la vanne d'admission 16 est ouverte pour éviter une surchauffe de prélèvement dans le cas d'une perte de puissance électrique. De plus, la vanne d'admission 16 est fermée par le dispositif 24 par l'intermédiaire du moteur couple.

A la sortie 12B de l'échangeur thermique 12, un débit d'air régulé à pression et température déterminées est donc obtenu et adressé aux installations utilisatrices de l'aéronef.

Si le besoin en air régulé peut être assuré par la seule vanne à pression intermédiaire 22, la vanne 14 est alors fermée, et l'air chaud issu de l'orifice 4B des compresseurs est adressé à l'échangeur thermique 12, par la voie 10B, la conduite 10 et la vanne de régulation 15. Simultanément, de l'air froid venant de la conduite d'air froid 11 parcourt également l'échangeur thermique.

De ce qui précède, on peut voir que, grâce à la présente invention, la pression de prélèvement est variable selon le besoin des installations utilisatrices, grâce aux moteurs couples et aux capteurs, au lieu de devoir être fixée à une valeur maximale conduisant à un surdimensionnement du système, indépendamment du besoin réel. La commande de la température de prélèvement peut être également variable au lieu d'être réglée à une ou deux valeurs fixées, comme dans les systèmes connus. Dans la vanne de régulation de pression 15, la commande du prélèvement d'air chaud est avantageusement redondante par le solénoïde 15R et le moteur couple 15N.

## Revendications

1. Système d'alimentation en air chaud pour un aéronef pourvu d'au moins un moteur (2) à soufflante (3) et compresseurs (4), comportant :
- une première conduite (10), qui prélève de l'air chaud sous pression sur lesdits compresseurs (4) et sur laquelle sont montées une vanne (14) de régulation de débit et une vanne (15) de régulation de pression, lesdites vannes comportant respectivement un organe commandé (14A ou 15A) susceptible de contrôler le passage de l'air chaud dans ladite première conduite ;
- une seconde conduite (11), qui prélève de l'air froid sous pression sur ladite soufflante (3) et sur laquelle est montée une vanne (16) de régulation de débit, ladite vanne comportant un organe commandé (16A) susceptible de contrôler le passage de l'air froid dans ladite seconde conduite ;
- un échangeur thermique de prérefroidissement (12) auquel sont reliées lesdites première et seconde conduites (10 et 11) ;
- un détecteur de température d'air (28), disposé à la sortie dudit échangeur thermique (12) ;
- un détecteur de pression d'air (27), disposé sur ladite première conduite de prélèvement d'air chaud (10) ;
- un dispositif de contrôle (24) recevant des signaux électriques représentatifs des mesures dudit détecteur de température (28) et dudit détecteur de pression (27) et commandant ladite vanne (14) de régulation de débit d'air chaud,
**caractérisé :**
- **en ce que** ladite vanne (14) de régulation de débit d'air chaud, ladite vanne (15) de régulation de pression d'air chaud et ladite vanne (16) de régulation de débit d'air froid comportent chacune un bloc de commande (14B, 15C, 16C) apte à contrôler l'organe commandé correspondant (14A, 15A, 16A) ;
- **en ce que** chacun desdits blocs de commande (14B, 15C, 16C) comporte des moyens, contrôlés électriquement, aptes à prélever de l'air sous pression dans lesdites première et seconde conduites (10, 11) pour actionner pneumatiquement ledit organe commandé correspondant (14A, 15A, 16A) ; et
- **en ce que** ledit dispositif de contrôle (24) commande, en plus de ladite vanne (14) de régulation de débit d'air chaud, ladite vanne (15) de régulation de pression d'air chaud et ladite vanne (16) de régulation de débit d'air froid, assurant ainsi la gestion centralisée dudit système.

2. Système selon la revendication 1, **caractérisé en ce que** chacun desdits blocs de commande (14B, 15C, 16C) forme une unité de construction avec l'organe commandé (14A, 15A, 16A) correspondant.

3. Système selon l'une des revendications 1 ou 2, **caractérisé en ce que** ledit détecteur de pression d'air chaud (27) est monté entre la vanne de régulation de pression (15) et l'échangeur thermique (12).

4. Système selon l'une des revendications 1 à 3, dans lequel ladite première conduite de prélèvement d'air chaud (10) présente, du côté desdits compresseurs (4), deux voies séparées (10A, 10B) dont l'une (10A) est reliée (en 4A) aux étages à haute pression desdits compresseurs (4) et comprend ladite vanne de régulation de débit d'air chaud (14), et dont l'autre (10B) est reliée (en 4B) aux étages à pression intermédiaire desdits compresseurs (4) et comprend une vanne mécanique unidirectionnelle (22),
**caractérisé en ce qu'**il comporte un détecteur de pression d'air supplémentaire (26) disposé sur ladite autre branche (10B) de ladite première conduite de prélèvement d'air chaud (10), entre ladite vanne mécanique unidirectionnelle (22) et lesdits étages à pression intermédiaire desdits compresseurs (4), ledit détecteur de pression d'air supplémentaire (26) adressant des signaux électriques représentatifs de ses mesures audit dispositif de contrôle (24).

5. Système selon l'une des revendications 1 à 4,
**caractérisé en ce que** l'organe commandé de ladite vanne de régulation de débit d'air chaud (14) est un papillon pivotant (14A), disposé dans la première conduite (10) au voisinage de la sortie (4A) des étages à haute pression desdits compresseurs (4), et **en ce que** le bloc de commande de ladite vanne de régulation de débit d'air chaud (14) comprend :
- un actionneur pneumatique (14B), relié mécaniquement audit papillon (14A) pour son pivotement ;
- un conduit de dérivation (14G) mettant en communication ledit actionneur (14B) avec ladite première conduite (10), en amont dudit papillon (14A) ; et
- un actionneur électrique (14R) relié électriquement audit dispositif de contrôle (24) et commandant le passage de l'air chaud dans ledit conduit de dérivation (14G).

6. Système selon l'une des revendications précédentes 1 à 5,
**caractérisé en ce que** l'organe commandé de ladite vanne de régulation de pression d'air chaud (15) est un papillon pivotant (15A) disposé dans ladite première conduite d'air chaud (10), et **en ce que** le bloc de commande de ladite vanne de régulation de pression d'air chaud (15) comprend :
- un actionneur pneumatique (15C), relié mécaniquement audit papillon (15A) pour son pivotement ;
- un conduit de dérivation (15H) mettant en communication ledit actionneur (15C) avec ladite première conduite, en amont dudit papillon (15A);
- un actionneur électrique (15R) relié électriquement audit dispositif de contrôle (24) et commandant le passage de l'air chaud dans ledit conduit de dérivation (15H) ; et
- des moyens de modulation (15N) commandés électriquement par ledit dispositif de contrôle (24) et modulant la quantité d'air chaud adressé audit actionneur à travers ledit conduit de dérivation (15H).

7. Système selon l'une des revendications 5 ou 6,
**caractérisé en ce que** ladite vanne de régulation (14, 15) à papillon pivotant (14A, 15A) comporte un réducteur de pression (14N, 15L) monté sur ledit conduit de dérivation (14G, 15H).

8. Système selon l'une des revendications précédentes 1 à 7,
**caractérisé en ce que** l'organe commandé de ladite vanne de régulation du débit d'air froid (16) est un papillon pivotant (16A) disposé dans ladite seconde conduite d'air froid (11), et **en ce que** le bloc de commande de ladite vanne de régulation de débit d'air froid (10) comprend :
- un actionneur pneumatique (16C), relié mécaniquement audit papillon (16A) pour son pivotement ;
- un conduit de dérivation (16G) mettant en communication ledit actionneur (16C) avec ladite première conduite d'air chaud (10), en aval de ladite vanne de régulation de pression d'air chaud (15); et
- des moyens de modulation (16M) commandés électriquement par ledit dispositif de contrôle (24) et modulant la quantité d'air froid adressé audit actionneur à travers ledit conduit de dérivation (16G).

9. Système selon la revendication 8,
**caractérisé en ce qu'**un conduit (16P) relie ladite seconde conduite de prélèvement d'air froid (11), en amont du papillon pivotant (16A), auxdits moyens de modulation (16M) pour en assurer le refroidissement.

## Patentansprüche

1. Warmluftversorgungseinrichtung für ein mit mindestens einem Motor (2) mit Gebläse (3) und Kompressoren (4) ausgestattetes Flugzeug, das folgendes umfasst:
• eine erste Leitung (10), die an den genannten Kompressoren (4) warme Druckluft entnimmt und an der ein Durchflussmengenregelventil (14) und ein Druckregelventil (15) montiert sind, wobei die genannten Ventile jeweils ein gesteuertes Organ (14A oder 15A) umfassen, das das Einströmen der Warmluft in die genannte erste Leitung kontrollieren kann;
• eine zweite Leitung (11), die kalte Druckluft am genannten Gebläse (3) entnimmt und an der ein Durchflussmengenregelventil (16) montiert ist, wobei das genannte Ventil ein gesteuertes Organ (16A) umfasst, das das Einströmen der Kaltluft in die genannte zweite Leitung kontrollieren kann;
• einen Vorkühlwärmetauscher (12), an den die genannte erste und zweite Leitung (10 und 11) angeschlossen sind;
• einen Lufttemperaturfühler (28), der am Ausgang des genannten Wärmetauschers (12) angeordnet ist;
• einen Luftdruckfühler (27), der an der genannten ersten Warmluftentnahmeleitung (10) angeordnet ist;
• eine Kontrollvorrichtung (24), die elektrische Signale erhält, die repräsentativ für die Messungen des genannten Temperaturfühlers (28) und des genannten Druckfühlers (27) sind, und die das genannte Warmluftdurchflussmengenregelventil (14) steuert,
**dadurch gekennzeichnet,**
• **dass** das genannte Warmluftdurchflussmengenregelventil (14), das genannte Warmluftdruckregelventil (15) und das genannte Kaltluftdruckregelventil (16) jeweils einen Steuerblock (14B, 15C, 16C) umfassen, der das entsprechende gesteuerte Organ (14A, 15A, 16A) kontrollieren kann;
• **dass** jeder der genannten Steuerblöcke (14B, 15C, 16C) elektrisch kontrollierte Mittel umfasst, die Druckluft an der genannten ersten und zweiten Leitung (10, 11) entnehmen können, um das entsprechende gesteuerte Organ (14A, 15A, 16A) pneumatisch zu betätigen; und
• **dass** die genannte Kontrollvorrichtung (24) außer dem genannten Warmluftdurchflussmengenregelventil (14) das genannte Warmluftdruckregelventil (15) und das genannte Kaltluftdruckregelventil (16) steuert und so die Zentralsteuerung des genannten Systems gewährleistet.

2. Einrichtung gemäß Anspruch 1,
**dadurch gekennzeichnet, dass** jeder der genannten Steuerblöcke (14B, 15C, 16C) mit dem entsprechenden gesteuerten Organ (14A, 15A, 16A) eine Baugruppe bildet.

3. Einrichtung gemäß Anspruch 1 oder 2,
**dadurch gekennzeichnet, dass** der genannte Warmluftdruckfühler (27) zwischen dem Druckregelventil (15) und dem Wärmetauscher (12) installiert ist.

4. Einrichtung gemäß einem der Ansprüche 1 bis 3, in dem die erste Warmluftentnahmeleitung (10) auf der Seite der genannten Kompressoren (4) zwei getrennte Leitungen (10A, 10B) umfasst, von denen eine (10A) (bei 4A) mit den Hochdruckstufen der genannten Kompressoren (4) verbunden ist und das genannte Warmluftmengenregelventil (14) umfasst, und die andere (10B) (bei 4B) mit den Mitteldruckstufen der genannten Kompressoren (4) verbunden ist und ein mechanisches Einrichtungsventil (22) umfasst,
**dadurch gekennzeichnet, dass** es einen zusätzlichen Luftdruckfühler (26) umfasst, der am genannten anderen Abzweig (10B) der genannten ersten Warmluftentnahmeleitung (10) zwischen dem genannten mechanischen Einrichtungsventil (22) und den genannten Mitteldruckstufen der genannten Kompressoren (4) angeordnet ist, wobei der genannte zusätzliche Luftdruckfühler (26) elektrische Signale, die repräsentativ für seine Messungen sind, an die genannte Kontrollvorrichtung (24) sendet.

5. Einrichtung gemäß einem der Ansprüche 1 bis 4,
**dadurch gekennzeichnet, dass** das gesteuerte Organ des genannten Warmluftdurchflussmengenregelventils (14) eine drehbar gelagerte Ventilklappe (14A) ist, die in der ersten Leitung (10) in Nähe des Ausgangs (4A) der Hochdruckstufen der genannten Kompressoren (4) angeordnet ist, und dadurch, dass der Steuerblock des genannten Warmluftdurchflussmengenregelventils (14) folgendes umfasst:
• ein pneumatisches Betätigungselement (14B), das mechanisch mit der genannten Ventilklappe (14A) zu deren Drehung verbunden ist;
• eine Abzweigleitung (14G), die das genannte Betätigungselement (14B) vor der genannten Ventilklappe (14A) mit der genannten ersten Leitung (10) verbindet; und
• ein elektrisches Betätigungselement (14R), das elektrisch mit der genannten Kontrollvorrichtung (24) verbunden ist und das Einströmen der Warmluft in die genannte Abzweigleitung (14G) steuert.

6. Einrichtung gemäß einem der vorstehenden Ansprüche 1 bis 5,
**dadurch gekennzeichnet, dass** das gesteuerte Organ des genannten Warmluftdruckregelventils (15) eine drehbar gelagerte Ventilklappe (15A) ist, die in der genannten ersten Warmluftleitung (10) angeordnet ist, und dadurch, dass der Steuerblock des genannten Warmluftdruckregelventils (15) folgendes umfasst:
• ein pneumatisches Betätigungsorgan (15C), das mechanisch mit der genannten Ventilklappe (15A) zu deren Drehung verbunden ist;
• eine Abzweigleitung (15H), die das genannte Betätigungselement (15C) vor der genannten Ventilklappe (15A) mit der genannten ersten Leitung verbindet; und
• ein elektrisches Betätigungselement (15R), das elektrisch mit der genannten Kontrollvorrichtung (24) verbunden ist und das Einströmen der Warmluft in die genannte Abzweigleitung (15H) steuert; und
• Modulationsmittel (15N), die elektrisch durch die genannte Kontrollvorrichtung (24) gesteuert werden und die durch die genannte Abzweigleitung (15H) zum genannten Betätigungselement geleitete Warmluftmenge modulieren.

7. Einrichtung gemäß Anspruch 5 oder 6,
**dadurch gekennzeichnet, dass** das genannte Regelventil (14, 15) mit drehbar gelagerter Ventilklappe (14A, 15A) einen Druckminderer (14N, 15L) umfasst, der an der genannten Abzweigleitung (14G, 15H) installiert ist.

8. Einrichtung gemäß einem der vorstehenden Ansprüche 1 bis 7,
**dadurch gekennzeichnet, dass** das gesteuerte Organ des genannten Kaltluftdurchflussmengenregelventils (16) eine drehbar gelagerte Ventilklappe (16A) ist, die in der genannten zweiten Kaltluftleitung (11) angeordnet ist, und dadurch, dass der Steuerblock des genannten Kaltluftdurchflussmengenregelventils (10) folgendes umfasst:
• ein pneumatisches Betätigungsorgan (16C), das mechanisch mit der genannten Ventilklappe (16A) zu deren Drehung verbunden ist;
• eine Abzweigleitung (16G), die das genannte Betätigungselement (16C) hinter dem genannten Warmluftdruckregelventil (15) mit der genannten ersten Warmtuftleitung (10) verbindet; und
• Modulationsmittel (16M), die elektrisch durch die genannte Kontrollvorrichtung (24) gesteuert werden und die durch die genannte Abzweigleitung (16G) zum genannten Betätigungselement geleitete Kaltluftmenge modulieren.

9. Einrichtung gemäß Anspruch 8,
**dadurch gekennzeichnet, dass** eine Leitung (16P) die genannte zweite Kattluftentnahmeleitung (11) vor der drehbar gelagerten Ventilklappe (16A) mit den genannten Modulationsmitteln (16M) verbindet, um deren Kühlung zu gewährleisten.

## Claims

1. A hot-air supply system for an aircraft equipped with at least one engine (2) with a fan (3) and compressors (4), comprising:
- a first pipe (10) which bleeds pressurized hot air off said compressors (4) and on which there are mounted a flow-regulating valve (14) and a pressure-regulating valve (15), said valves respectively comprising a controlled member (14A or 15A) capable of controlling the passage of hot air through said first pipe;
- a second pipe (11), which bleeds pressurized cold air off said fan (3) and on which is mounted a flow-regulating valve (16), said valve comprising a controlled member (16A) capable of controlling the passage of cold air through said second pipe;
- a pre-cooling heat exchanger (12) to which said first and second pipes (10 and 11) are connected;
- an air-temperature detector (28), placed at the outlet from said heat exchanger (12);
- an air-pressure detector (27), placed on said first hot-air bleed pipe (10);
- a control device (24) receiving electrical signals representing measurements from said temperature detector (28) and from said pressure detector (27) and controlling said hot-air flow-regulating valve (14),
**characterized:**
- **in that** said hot-air flow-regulating valve (14), said hot-air pressure-regulating valve (15) and said cold-air flow-regulating valve (16) each comprise a control unit (14B, 15C, 16C) capable of controlling the corresponding controlled member (14A, 15A, 16A);
- **in that** each of said control units (14B, 15C, 16C) comprises electrically controlled means capable of bleeding pressurized air from said first and second pipes (10, 11) to actuate said corresponding controlled member (14A, 15A, 16A) pneumatically; and
- **in that** said control device (24), in addition to controlling said hot-air flow-regulating valve (14) controls said hot-air pressure-regulating valve (15) and said cold-air flow-regulating valve (16), thus providing said system with centralized management.

2. A system as claimed in claim 1, **characterized in that** each of said control units (14B, 15C, 16C) forms a single constructional entity with the corresponding controlled member (14A, 15A, 16A).

3. A system as claimed in either of claims 1 and 2, **characterized in that** said hot-air pressure detector (27) is mounted between the pressure-regulating valve (15) and the heat exchanger (12).

4. A system as claimed in one of claims 1 to 3, in which said first hot-air bleed pipe (10) has, at the same end as said compressors (4), two separate paths (10A, 10B), one (10A) of which is connected (at 4A) to the high-pressure stages of said compressors (4) and comprises said hot-air flow-regulating valve (14), and the other (10B) of which is connected (at 4B) to the intermediate-pressure stages of said compressors (4) and comprises a one-way mechanical valve (22), **characterized in that** it comprises an additional air pressure detector (26) arranged on said other branch (10B) of said first hot-air bleed pipe (10), between said one-way mechanical valve (22) and said intermediate-pressure stages of said compressors (4), said additional air pressure detector (26) sending said control device (24) electrical signals representing its measurements.

5. A system as claimed in one of claims 1 to 4, **characterized in that** the controlled member of said hot-air flow-regulating valve (14) is a pivoting butterfly (14A) arranged in the first pipe (10) near the outlet (4A) from the high-pressure stages of said compressors (4), and **in that** the control unit of said hot-air flow-regulating valve (14) comprises:
- a pneumatic actuator (14B), mechanically connected to said butterfly (14A) so as to pivot it;
- a branched-off pipe (14G) placing said actuator (14B) in communication with said first pipe (10), upstream of said butterfly (14A); and
- an electric actuator (14R) electrically connected to said control device (24) and controlling the passage of hot air through said branched-off pipe (14G).

6. A system as claimed in one of the preceding claims 1 to 5, **characterized in that** the controlled member of said hot-air pressure-regulating valve (15) is a pivoting butterfly (15A) arranged in said first hot-air pipe (10), and **in that** the control unit for said hot-air pressure-regulating valve (15) comprises:
- a pneumatic actuator (15C), mechanically connected to said butterfly (15A) so as to pivot it;
- a branched-off pipe (15H) placing said actuator (15C) in communication with said first pipe, upstream of said butterfly (15A);
- an electric actuator (15R) electrically connected to said control device (24) and controlling the passage of hot air through said branched-off pipe (15H); and
- modification means (15N) controlled electrically by said control device (24) and modifying the amount of hot air sent to said actuator through said branched-off pipe (15H).

7. A system as claimed in either of claims 5 and 6, **characterized in that** said regulating valve (14, 15) with pivoting butterfly (14A, 15A) comprises a pressure reducer (14N, 15L) mounted on said branched-off pipe (14G, 15H).

8. A system as claimed in one of the preceding claims 1 to 7, **characterized in that** the controlled member of said cold-air flow-regulating valve (16) is a pivoting butterfly (16A) arranged in said second cold-air pipe (11), and **in that** the control unit for said cold-air flow-regulating valve (10) comprises:
- a pneumatic actuator (16C), mechanically connected to said butterfly (16A) so as to pivot it;
- a branched-off pipe (16G) placing said actuator (16C) in communication with said first hot-air pipe (10), downstream of said hot-air pressure-regulating valve (15); and
- modification means (16M) controlled electrically by said control device (24) and modifying the amount of cold air sent to said actuator through said branched-off pipe (16G).

9. A system as claimed in claim 8, **characterized in that** a pipe (16P) connects said second cold-air bleed pipe (11), upstream of the pivoting butterfly (16A), to said modification means (16M) to provide them with cooling.
